# EUROPEAN PATENT SPECIFICATION

(11) **EP 3 666 492 B1**
(45) Date of publication and mention of the grant of the patent: **07.02.2024**
(21) Application number: 18382926.6
(22) Date of filing: 14.12.2018
(51) Int. Cl.: B29C 45/14

(54) **FRONT PANEL**
FRONTPLATTE
PANNEAU AVANT

(43) Date of publication of application: 17.06.2020
(73) Proprietor: BSH Hausgeräte GmbH, 81739 München (DE)
(72) Inventor: Alvarez Lanuza, Sandra, 50013 Zaragoza (ES); Anadon Bayo, Andrés, 50059 Montañana (ES); Buñuel Magdalena, Miguel Angel, 50017 Zaragoza (ES); Escartín Barduzal, Andrés, 50009 Zaragoza (ES); Gotor Latorre, Virginia, 50009 Zaragoza (ES); Martinez Solanas, Elena, 50015 Zaragoza (ES); Planas Layunta, Fernando, 50009 Zaragoza (ES); Soler Costa, Juan Ramon, 50003 Zaragoza (ES)

(56) References cited:
- EP-A1- 2 883 991
- WO-A1-2012/071259
- CN-A- 102 066 076
- US-A1- 2004 209 032

## Description

The present invention relates to a home appliance comprising a front panel.

The external appearance of housings of user devices, particularly those of home appliances, are a key factor for attracting consumers which is even more true for front panels of such housings. The tactile sensation a front panel provides to a user is another important factor. These factors can be incorporated into a front panel by specialized films manufactured via molding method.

US 2004/209032 A1 describes a process for preparing a molded plastic article having a sheet material surface piece such as metal or wood comprising the steps of providing the precut sheet material surface piece to a mold cavity and, in a molding step, molding onto the sheet material a substrate plastic component.

WO 2012/071259 A1 describes a method of binding plastic and metal substrate together, wherein on a surface of the metal substrate a laser beam is applied to form many micro-holes. The method comprises then to inject plastic material on a selected area of the metal substrate.

US 2010/055417 A1 describes a housing comprising a decorative film which provides a tactile sensation.

The present invention deals with the problem of specifying an improved or at least alternative method for manufacturing a front panel, particularly for a home appliance, which is distinguished in particular by low production costs and simplicity. The present invention further deals with the problem of specifying a front panel manufactured by such a method which is distinguished in particular by an aesthetic appeal, a haptic stimulus provided to a user, and a high lifetime.

This problem is solved by the subject matter of the independent patent claim. Preferred embodiments are the subject matter of the dependent patent claims.

Accordingly, the basic idea of the invention is to overmold a preformed decorative thin layer with a thermoplastic material in order to form a thermoplastic layer which provides a haptic stimulus.

The invention relates to a home appliance comprising a front panel. The front panel comprises a preformed thin decorative layer and a thermoplastic layer, formed integrally with each other.

The method for manufacturing the front panel with the preformed thin decorative layer and the thermoplastic layer, wherein the thermoplastic layer provides a haptic stimulus, comprises a step of placing the preformed thin decorative layer, particularly a metal film or a plastic film, in a mold cavity of an injection molding machine. The method further comprises injecting a thermoplastic material into the mold cavity and at least partially over the preformed thin decorative layer to create the thermoplastic layer, wherein in the manufactured front panel the created thermoplastic layer comprises the thermoplastic material and is integrally formed with the decorative layer. Furthermore, the method comprises letting the thermoplastic layer or both layers set in the mold. Afterwards the method comprises ejecting the front panel from the mold cavity when at least the thermoplastic layer is set. In this way, a front panel providing a haptic stimulus and being decorative is manufactured in a simple way and with low production costs.

Before the preformed thin decorative layer is placed in the mold cavity, the preformed thin decorative layer is at least partially micro-perforated, particularly by means of a laser, such that the micro-perforated area is retro-illuminable. In this way, a particularly decorative front panel is manufactured.

The home appliance comprises a light source to retro-illuminate the micro-perforated area. The home appliance further comprises an electronic control unit, wherein the electronic control unit is communicating with the light source, and is configured/programmed to retro-illuminate the micro-perforated area.

According to a preferred embodiment, the preformed thin decorative layer placed in the mold comprises stainless steel and, additionally or alternatively, polycyclooctene. This allows for a particularly decorative front panel.

According to a further preferred embodiment, the thermoplastic material injected comprises polyethylene, polypropylene, polyamide, polycarbonate, acrylonitrile bivinyl, polymethyl methacrylate or any combination thereof. With such a thermoplastic material a front panel with a particularly pleasant haptic stimulus can be manufactured.

In an advantageous embodiment, the thermoplastic material injected comprises glass fiber. With such a thermoplastic material a particularly physically robust thermoplastic layer can be manufactured.

In another advantageous embodiment, before the preformed thin decorative layer is placed in the mold cavity, the preformed thin decorative layer is treated, particularly by means of a laser treatment, such that the adhesion of the preformed thin decorative layer to the thermoplastic layer is enhanced. Via such process the adhesion of the preformed thin decorative layer to the thermoplastic layer is enhanced particularly well.

In yet another advantageous embodiment, the preformed thin decorative layer placed in the mold cavity has anti-bacterial and, additionally or alternatively, anti-scratch and, additionally or alternatively, self-healing properties. This allows for a front panel with additional advantageous properties.

According to a further preferred embodiment, the thermoplastic material is injected into the mold cavity at a pressure of 300 bar to 1200 bar, and, additionally or alternatively, the thermoplastic material is injected into the mold cavity at a speed of 25 cm³/s to 60 cm³/s, and, additionally or alternatively, the thermoplastic material is injected into the mold cavity at a temperature of 220 °C to 300 °C. These parameters provide particularly optimized boundary conditions for the injection of the thermoplastic material into the mold.

Advantageously, during injecting the thermoplastic material into the mold cavity and, additionally or alternatively, while letting at least the thermoplastic layer set, the molding machine is kept at a temperature of 50°C to 100 °C. This allows for a particularly continuous flow of thermoplastic material into the mold cavity without thermoplastic material setting too early, such that thermoplastic material injected after some first amount of thermoplastic material enters the mold cavity is not blocked from reaching parts of the mold cavity, particularly part of the mold cavity further away from the sprue, due to setting of the thermoplastic material which entered before.

Expediently, if the preformed thin decorative layer is a plastic film, the front panel is ejected from the mold cavity when both layers are set. This way the adhesion of the preformed thin decorative layer to the thermoplastic layer is particularly integrally formed. Further important features and advantages of the invention can be gathered from the subclaims, from the drawing and from the associated figure description using the drawing.

An example of the invention is illustrated in the drawing and will be explained in more detail in the following description.

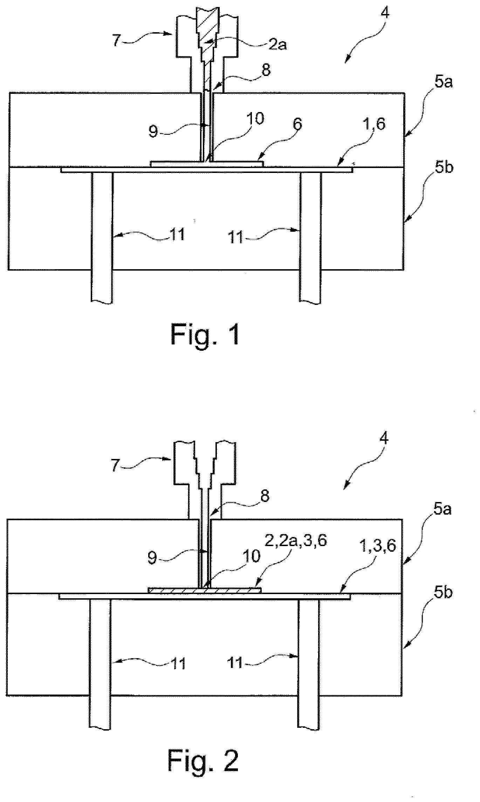

Figure 1 schematically shows an example of a molding machine 4 in a profile view before the injection of a thermoplastic material 2a into a mold cavity 6 of the molding machine 4. In operation, the molding machine 4 runs the method for manufacturing a front panel 3 according to the present invention.

In figure 1 the molding machine 4 is closed, meaning an injection mold 5a of the molding machine 4 and an ejector mold 5b of the molding machine 4 are connected, such that the cavity 6 is formed. The thermoplastic material 2a is provided in a barrel 7 and heated such that it liquefies. Heating can occur through heating elements and, additionally or alternatively, by mechanical force of a screw (not shown in figure 1 and 2) in the injection barrel 7. Such a screw can also be used to drive the thermoplastic material 2a through the nozzle 8 into the sprue 9.

The method for manufacturing a front panel 3 with a preformed thin decorative layer 1 and a thermoplastic layer 2, wherein the thermoplastic layer provides a haptic stimulus, comprises a step of placing the preformed thin decorative layer 1, particularly a metal film or a plastic film, in the mold cavity 6 of the injection molding machine 4. In the example of figures 1 and 2 the preformed thin decorative layer 1 is placed in a part of the mold cavity 6 which is enclosed on three sides by the ejector mold 5b.

In the examples of Figures 1 and 2, the preformed thin decorative layer 1 comprises stainless steel. Additionally or alternatively, the preformed thin decorative layer 1 placed in the mold cavity could also comprise polycyclooctene. Additional decorative properties 35 of the preformed thin decorative layer like decoration with paint or engravings are also possible. Before the preformed thin decorative layer 1 is placed in the mold cavity 6, the preformed thin decorative layer 1 can be partially micro-perforated by means of a laser, such that the micro-perforated area is retro-illuminable. Also, before the preformed thin decorative layer 1 is placed in the mold cavity 6, the preformed thin decorative layer 1 is treated by means of a laser treatment, such that adhesion of the preformed thin decorative layer 1 to thermoplastic material 2a molded over the preformed thin decorative layer 1 is enhanced. The preformed thin decorative layer 1 placed in the mold can also have anti-bacterial, anti-scratch, and self-healing properties.

The method further comprises injecting a thermoplastic material 2a into the mold cavity 6 and at least partially over the preformed thin decorative layer 1 to create the thermoplastic layer 2 comprising the thermoplastic material 2a and being integrally formed with the decorative layer 1. In the example of figures 1 and 2 the thermoplastic layer 2 is injected in a part of the mold cavity 6 which is enclosed on three sides by the injector mold 5a and which is not occupied by the preformed thin decorative layer 1. The thermoplastic material 2a is injected into the mold cavity 6 at a pressure of 300 bar to 1200 bar, at a speed of 25 cm³/s to 60 cm³/s, and at a temperature of 220°C to 300 °C.

The thermoplastic material 2a comprises polyethylene, polypropylene, polyamide, polycarbonate, acrylonitrile bivinyl, polymethyl methacrylate or any combination thereof. The thermoplastic material 2a provides the front panel 3 with a particularly pleasant haptic stimulus. The thermoplastic material 2a also comprises glass fiber, particularly 30% of the total weight of the thermoplastic material 2a.

During injecting the thermoplastic material 2a into the mold cavity 6 and, alternatively or additionally, while letting at least the thermoplastic layer 2 set, the molding machine 4 is, particularly partially, kept at a temperature of 50 °C to 100 °C. The temperature of the injector mold 5a and the ejector mold 5b can be identical or different from each other.

The thermoplastic material 2a flows continuously into the mold cavity 6 through the gate 10 without thermoplastic material 2a setting too early, such that thermoplastic material 2a injected into the mold cavity 6 after some first amount of thermoplastic material 2a enters the mold cavity 6 is not blocked from reaching any parts of the mold cavity 6, particularly parts of the mold cavity 6 further away from the sprue 9. Trapped air in the mold cavity 6 can escape though air vents (not shown in figures 1 an 2) in the molding machine 4.

Then the thermoplastic layer 2 or both layers 1, 2 are let set in the mold cavity 6. Figure 2 schematically shows an example of the molding machine 4 in a profile view after the injection of the thermoplastic material 2a into the mold cavity 6 of the molding machine 4 has started. It is possible that there is still some thermoplastic material 2a in the sprue 9 and, additionally or alternatively, in the injection barrel 7.

When at least the thermoplastic layer 2, in other words the thermoplastic material 2a forming the thermoplastic layer, is set, the molding machine 4 is opened and the front panel 3 is ejected from the mold. In case of the metal film as the preformed thin decorative layer 1 only the thermoplastic layer 2 is let set. If the preformed thin decorative layer 1 is a plastic film, the front panel 3 is ejected from the molding machine when both layers are set. The ejection is done by means of ejector pins 11, wherein the ejector pins push into the mold cavity 6 and against the front panel 3, which now comprises the preformed thin decorative layer 1 and the thermoplastic layer 2, formed integrally with each other.

Figure 2 shows an embodiment of the front panel 3 according to the invention in a state not yet ejected from the mold cavity 6 in a profile view. The thickness of the preformed thin decorative layer 1 of the front panel 3 is between 0,05 and 1 mm. The thickness of the thermoplastic layer 2 of the front panel 3 is between 1 and 5 mm. Both layers 1, 2 can also be regarded as films or foils.

The front panel 3 manufactured according to this example is used for a home appliance (not shown in figure 1 and 2), particularly a dishwasher or a washing machine. The home appliance comprises a light source to retro-illuminate the micro-perforated area of the preformed decorative thin layer. The home appliance further comprises an electronic control unit, wherein the electronic control unit is communicating with the light source, and is configured/programmed to retro-illuminate the micro-perforated area.

### LIST OF REFERENCE CHARACTERS/SIGNS

- 1: Preformed decorative thin layer
- 2: Thermoplastic layer
- 2a: Thermoplastic material
- 3: Front panel
- 4: Injection molding machine
- 5a: Injector mold
- 5b: Ejector mold
- 6: Mold cavity
- 7: Injection barrel
- 8: Nozzle
- 9: Sprue
- 10: Gate
- 11: Ejector pins

## Claims

1. A home appliance comprising a front panel (3), wherein the front panel (3) comprises a preformed thin decorative layer (1) and a thermoplastic layer (2), wherein the thermoplastic layer provides a haptic stimulus, wherein the front panel (3) is obtained by a method comprising the steps of:
a) Placing the preformed thin decorative layer (1), a metal film or a plastic film in a mold cavity (6) of an injection molding machine (4);
b) Injecting a thermoplastic material (2a) into the mold cavity (6) and at least partially over the preformed thin decorative layer (1) to create the thermoplastic layer (2), such that in the obtained front panel (3) the created thermoplastic layer (2) comprises the thermoplastic material (2a) and is integrally formed with the decorative layer (1);
c) Letting the thermoplastic layer (2) or both layers (1, 2) set in the mold;
d) Ejecting the front panel (3) from the mold when at least the thermoplastic layer (2) is set, wherein the method, by means of which the front panel (3) is obtained, further comprises the following additional step a1) carried out before step a):
a1) At least partially micro-perforating the preformed thin decorative layer (1), by means of a laser, such that a micro-perforated area of the preformed thin decorative layer (1) is retro-illuminable,
and wherein in the home appliance comprising the front panel (3):
- the home appliance comprises a light source to retro-illuminate the micro-perforated area of the preformed thin decorative layer (1);
- and the home appliance comprises an electronic control unit, wherein the electronic control unit is communicating with the light source, and is configured/programmed to retro-illuminate the micro-perforated area.

2. The home appliance according to claim 1,
**characterized in that**
the preformed thin decorative layer (1) placed in the mold in step a) comprises stainless steel and/or polycyclooctene.

3. The home appliance according to claim 2,
**characterized in that**
the thermoplastic material (2a) injected in step b) comprises polyethylene, polypropylene, polyamide, polycarbonate, acrylonitrile bivinyl, polymethyl methacrylate or any combination thereof.

4. The home appliance according to any of claims 1 to 3,
**characterized in that**
the thermoplastic material (2a) injected in step b) comprises glass fiber.

5. The home appliance according to any of claims 1 to 4,
**characterized in that**
the method further comprises the following additional step a2) carried out before step a):
a2) Treating the preformed thin decorative layer (1), particularly by means of a laser treatment, such that the adhesion of the preformed thin decorative layer (1) to the thermoplastic layer (2) is enhanced.

6. The home appliance according to any of claims 1 to 5,
**characterized in that**
the preformed thin decorative layer (1) placed in the mold cavity (6) in step a) has anti-bacterial and/or anti-scratch and/or self-healing properties.

7. The home appliance according to any of claims 1 to 6,
**characterized in that**
in step b) the thermoplastic material (2a) is injected into the mold cavity at a pressure of 300 bar to 1200 bar, and/or
in step b) the thermoplastic material (2a) is injected into the mold cavity at a speed of 25 cm³/s to 60 cm³/s, and/or
in step b) the thermoplastic material (2a) is injected into the mold cavity at a temperature of 220 °C to 300 °C.

8. The home appliance according to any of claims 1 to 7,
**characterized in that**
in step b) and/or step c) the molding machine (4) is kept at a temperature of 50°C to 100 °C.

9. The home appliance according to any of claims 1 to 8,
**characterized in that**
in step d) the front panel (3) is ejected from the mold cavity (6) when both layers are set.

## Patentansprüche

1. Haushaltsgerät mit einer Frontblende (3), wobei die Frontblende (3) eine vorgeformte dünne Dekorschicht (1) und eine Thermoplastschicht (2) umfasst, wobei die Thermoplastschicht für einen Berührungsreiz sorgt, wobei die Frontblende (3) über ein Verfahren mit folgenden Schritten erhalten wird:
a) Platzieren der vorgeformten dünnen Dekorschicht (1), einer Metall- oder Kunststofffolie in einen Formwerkzeughohlraum (6) einer Spritzgießmaschine (4),
b) Einspritzen eines Thermoplastmaterials (2a) in den Formwerkzeughohlraum (6) und zumindest teilweise auf die vorgeformte dünne Dekorschicht (1) zwecks Erzeugens der Thermoplastschicht (2), so dass die erzeugte Thermoplastschicht (2) bei der erhaltenen Frontblende (3) das Thermoplastmaterial (2a) umfasst und an die Dekorschicht (1) angeformt ist,
c) Aushärtenlassen der Thermoplastschicht (2) oder beider Schichten (1, 2) im Formwerkzeug,
d) Auswerfen der Frontblende (3) aus dem Formwerkzeug, wenn zumindest die Thermoplastschicht (2) ausgehärtet ist, wobei das Verfahren, über das die Frontblende (3) erhalten wird, ferner den folgenden zusätzlichen Schritt a1) umfasst, der vor Schritt a) durchgeführt wird:
a1) zumindest teilweises Mikroperforieren der vorgeformten dünnen Dekorschicht (1) mithilfe eines Lasers, so dass sich ein mikroperforierter Bereich der vorgeformten dünnen Dekorschicht (1) von hinten beleuchten lässt,
und wobei bei dem Haushaltsgerät mit der Frontblende (3):
- das Haushaltsgerät eine Lichtquelle zum Beleuchten des mikroperforierten Bereichs der vorgeformten dünnen Dekorschicht (1) von hinten umfasst,
- und das Haushaltsgerät eine elektronische Steuerung umfasst, wobei die elektronische Steuerung mit der Lichtquelle kommuniziert und so konfiguriert/programmiert ist, dass sie den mikroperforierten Bereich von hinten beleuchtet.

2. Haushaltsgerät nach Anspruch 1,
**dadurch gekennzeichnet, dass**
die bei Schritt a) in dem Formwerkzeug platzierte vorgeformte dünne Dekorschicht (1) nichtrostenden Stahl und/oder Polycycloocten umfasst.

3. Haushaltsgerät nach Anspruch 2,
**dadurch gekennzeichnet, dass**
das bei Schritt b) eingespritzte Thermoplastmaterial (2a) Polyethylen, Polypropylen, Polyamid, Polycarbonat, Acrylnitril-Bivinyl, Polymethylmethacrylat oder eine beliebige Kombination davon umfasst.

4. Haushaltsgerät nach einem der Ansprüche 1 bis 3,
**dadurch gekennzeichnet, dass**
das bei Schritt b) eingespritzte Thermoplastmaterial (2a) Glasfaser umfasst.

5. Haushaltsgerät nach einem der Ansprüche 1 bis 4,
**dadurch gekennzeichnet, dass**
das Verfahren ferner folgenden zusätzlichen Schritt a2) umfasst, der vor Schritt a) durchgeführt wird:
a2) Behandeln, insbesondere Laserbehandeln, der vorgeformten dünnen Dekorschicht (1), so dass sich die Adhäsion der vorgeformten dünnen Dekorschicht (1) an der Thermoplastschicht (2) verbessert.

6. Haushaltsgerät nach einem der Ansprüche 1 bis 5,
**dadurch gekennzeichnet, dass**
die bei Schritt a) in den Formwerkzeughohlraum (6) platzierte vorgeformte dünne Dekorschicht (1) antibakterielle und/oder vor Kratzern schützende und/oder selbstheilende Eigenschaften aufweist.

7. Haushaltsgerät nach einem der Ansprüche 1 bis 6,
**dadurch gekennzeichnet, dass**
das Thermoplastmaterial (2a) bei Schritt b) mit einem Druck von 300 bar bis 1200 bar in den Formwerkzeughohlraum eingespritzt wird und/oder
das Thermoplastmaterial (2a) bei Schritt b) mit einer Geschwindigkeit von 25 cm3/s bis 60 cm3/s in den Formwerkzeughohlraum eingespritzt wird und/oder
das Thermoplastmaterial (2a) bei Schritt b) bei einer Temperatur von 220°C bis 300°C in den Formwerkzeughohlraum eingespritzt wird.

8. Haushaltsgerät nach einem der Ansprüche 1 bis 7,
**dadurch gekennzeichnet, dass**
die Formmaschine (4) bei Schritt b) und/oder Schritt c) auf einer Temperatur von 50°C bis 100°C gehalten wird.

9. Haushaltsgerät nach einem der Ansprüche 1 bis 8,
**dadurch gekennzeichnet, dass**
die Frontblende (3) bei Schritt d) aus dem Formwerkzeughohlraum (6) ausgeworfen wird, wenn beide Schichten ausgehärtet sind.

## Revendications

1. Appareil ménager comprenant un panneau avant (3), dans lequel le panneau avant (3) comprend une couche décorative mince préformée (1) et une couche thermoplastique (2), dans lequel la couche thermoplastique fournit un stimulus haptique, dans lequel le panneau avant (3) est obtenu via un procédé comprenant les étapes suivantes :
a) placement de la couche décorative mince préformée (1), d'un film métallique ou d'un film plastique dans une cavité de moulage (6) d'une machine de moulage par injection (4) ;
b) injection d'un matériau thermoplastique (2a) dans la cavité de moulage (6) et au moins partiellement sur la couche décorative mince préformée (1) afin de créer la couche thermoplastique (2), de sorte que dans le panneau avant obtenu (3) la couche thermoplastique créée (2) comprend un matériau thermoplastique (2a) et est intégralement formée avec la couche décorative (1) ;
c) laisser prendre la couche thermoplastique (2) ou les deux couches (1, 2) dans le moule ;
d) éjection du panneau avant (3) en dehors du moule lorsqu'au moins la couche thermoplastique (2) a pris, dans lequel le procédé, au moyen duquel le panneau avant (3) est obtenu, comprend en outre l'étape supplémentaire suivante a1) effectuée avant l'étape a) :
a1) micro-perforation au moins partielle de la couche décorative mince préformée (1), au moyen d'un laser, de sorte qu'une zone micro-perforée de la couche décorative mince préformée (1) peut être rétroéclairée, et dans lequel dans l'appareil ménager comprenant le panneau avant (3) :
- l'appareil ménager comprend une source lumineuse pour rétroéclairer la zone microperforée de la couche décorative mince préformée (1) ;
- et l'appareil ménager comprend une unité de commande électronique, dans lequel l'unité de commande électronique communique avec la source lumineuse et est configurée/programmée afin de rétroéclairer la zone microperforée.

2. Appareil ménager selon la revendication 1, **caractérisé en ce que** la couche décorative mince préformée (1) placée dans le moule à l'étape a) comprend de l'acier inoxydable et/ou du polycyclooctène.

3. Appareil ménager selon la revendication 2, **caractérisé en ce que** le matériau thermoplastique (2a) injecté à l'étape b) comprend du polyéthylène, du polypropylène, du polyamide, du polycarbonate, de l'acrylonitrile bivinyle, du polyméthyle méthacrylate ou une quelconque combinaison de ceux-ci.

4. Appareil ménager selon l'une quelconque des revendications 1 à 3, **caractérisé en ce que** le matériau thermoplastique (2a) injecté à l'étape b) comprend de la fibre de verre.

5. Appareil ménager selon l'une quelconque des revendications 1 à 4, **caractérisé en ce que** le procédé comprend en outre l'étape supplémentaire suivante a2) effectuée avant l'étape a): a2) traitement de la couche décorative mince préformée (1), en particulier au moyen d'un traitement laser, de sorte que l'adhésion de la couche décorative mince préformée (1) à la couche thermoplastique (2) est améliorée.

6. Appareil ménager selon l'une quelconque des revendications 1 à 5, **caractérisé en ce que** la couche décorative mince préformée (1) placée dans la cavité de moulage (6) à l'étape a) possède des propriétés antibactériennes et/ou antirayures et/ou autoréparatrices.

7. Appareil ménager selon l'une quelconque des revendications 1 à 6, **caractérisé en ce qu'**à l'étape b) le matériau thermoplastique (2a) est injecté dans la cavité de moulage à une pression de 300 bars à 1200 bars, et/ou à l'étape b) le matériau thermoplastique (2a) est injecté dans la cavité de moulage à une vitesse de 25 cm³/s à 60 cm³/s, et/ou à l'étape b) le matériau thermoplastique (2a) est injecté dans la cavité de moulage à une température de 220°C à 300 °C.

8. Appareil ménager selon l'une quelconque des revendications 1 à 7, **caractérisé en ce qu'**à l'étape b) et/ou à l'étape c) la machine de moulage (4) est maintenue à une température de 50°C à 100 °C.

9. Appareil ménager selon l'une quelconque des revendications 1 à 8, **caractérisé en ce qu'**à l'étape d) le panneau avant (3) est éjecté de la cavité de moulage (6) lorsque les deux couches ont pris.
